(19) Europäisches Patentamt / European Patent Office / Office européen des brevets

(11) **EP 2 798 339 B1**

(12) **FASCICULE DE BREVET EUROPEEN**

(45) Date de publication et mention
de la délivrance du brevet:
**11.10.2017 Bulletin 2017/41**

(21) Numéro de dépôt: **12823247.7**

(22) Date de dépôt: **26.12.2012**

(51) Int Cl.:
*G01N 23/20* (2006.01)      *G01V 5/00* (2006.01)
*G01N 23/207* (2006.01)      *G01T 1/36* (2006.01)
*G21K 1/02* (2006.01)

(86) Numéro de dépôt international:
**PCT/FR2012/053080**

(87) Numéro de publication internationale:
**WO 2013/098520 (04.07.2013 Gazette 2013/27)**

(54) **PROCÉDÉ D'ANALYSE D'UN ÉCHANTILLON DE MATÉRIAU PAR DIFFRACTOMÉTRIE ET DIFFRACTOMÈTRE ASSOCIÉ**

VERFAHREN ZUR ANALYSE EINER MATERIALPROBE MITTELS DIFFRAKTOMETRIE UND ZUGEHÖRIGES DIFFRAKTOMETER

METHOD OF ANALYSING A SAMPLE OF MATERIAL BY DIFFRACTOMETRY AND ASSOCIATED DIFFRACTOMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2011 FR 1162497**
**20.09.2012 FR 1258851**

(43) Date de publication de la demande:
**05.11.2014 Bulletin 2014/45**

(73) Titulaire: **Commissariat à l'Énergie Atomique et aux Énergies Alternatives**
**75015 Paris (FR)**

(72) Inventeurs:
• **GHAMMRAOUI, Bahaa**
**Nord Du Liban (LB)**
• **TABARY, Joachim**
**38100 Grenoble (FR)**
• **PAULUS, Caroline**
**38000 Grenoble (FR)**

(74) Mandataire: **Santarelli**
**Immeuble Innopolis A**
**2ème étage**
**1149 La Pyrénéenne**
**CS 77697**
**31676 Labège Cedex (FR)**

(56) Documents cités:
**FR-A1- 2 956 216**      **US-A- 5 007 072**
**US-A1- 2006 140 340**

• **ORDAVO I ET AL: "A new pnCCD-based color X-ray camera for fast spatial and energy-resolved measurements", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, vol. 654, no. 1, 29 mai 2011 (2011-05-29), pages 250-257, XP028290782, ISSN: 0168-9002, DOI: 10.1016/J.NIMA.2011.05.080 [extrait le 2011-06-17]**
• **HARDING ET AL: "X-ray diffraction imaging-A multi-generational perspective", APPLIED RADIATION AND ISOTOPES, ELSEVIER, OXFORD, GB, vol. 67, no. 2, 1 février 2009 (2009-02-01), pages 287-295, XP025846513, ISSN: 0969-8043, DOI: 10.1016/J.APRADISO.2008.08.006 [extrait le 2008-08-14]**

EP 2 798 339 B1

## Description

La présente invention concerne un procédé d'analyse d'un matériau par diffractométrie, et un diffractomètre associé.

Il est connu d'utiliser la diffractométrie pour détecter certaines substances cristallines telles que la plupart des explosifs ou de nombreuses autres structures dangereuses ou illégales. Dans un cristal, qui est un agencement d'atomes, les ondes électromagnétiques diffusées de façon élastique interfèrent entre elles pour donner une diffusion cohérente à l'échelle du cristal. Lorsque ces interférences sont constructives, elles peuvent être repérées par la mesure d'un rayonnement diffracté et par l'identification des pics de diffraction. Ainsi, les interférences constructives sont repérées par une apparition de pics de diffraction (ou pics de Bragg) dans le rayonnement diffusé par un matériau.

Pour savoir si une substance cristalline donnée est contenue dans un matériau, il est donc connu de :

✔ irradier un échantillon du matériau à l'aide d'un faisceau incident d'axe central X, émis par une source,

✔ étudier le rayonnement diffracté à l'aide d'un dispositif de détection comprenant

♦ un détecteur, dit détecteur spectrométrique, apte à établir un spectre en énergie du rayonnement diffusé selon un angle de diffusion donné, c'est-à-dire un détecteur comprenant

◦ un matériau détecteur, qui présente, du côté de l'échantillon de matériau, un plan dit plan de détection,
◦ des moyens, dits moyens de mesure spectrométrique, aptes à mesurer une énergie libérée par chaque interaction d'un photon avec le matériau détecteur et à établir au moins un spectre en énergie, noté S(E).

♦ un collimateur, dit collimateur de détection, associé au détecteur, le détecteur et le collimateur de détection étant agencés de façon à présenter un axe de détection D, l'axe de détection D formant avec l'axe central X du faisceau incident un angle de diffraction θ.

Il est à noter qu'un spectre en énergie illustre la distribution de l'énergie d'un rayonnement sous la forme d'un histogramme représentant le nombre d'interactions de photon dans le matériau (en ordonnée) en fonction de l'énergie libérée (en abscisse). Généralement, l'axe des énergies est discrétisé en canaux de largeur 2 δE, un canal Ci correspondant aux énergies comprises entre Ei-δE et Ei+δE.

Les divers pics obtenus sur un spectre en énergie d'un rayonnement diffusé, selon un angle θ, sont caractéristiques du matériau analysé, car le rayonnement diffusé participant aux interférences constructives vérifie l'équation suivante,

$$E_{hkl} = n \frac{hc}{2d_{hkl}\sin(\theta/2)}$$

avec :

$d_{hkl}$ : distance inter-réticulaire entre les plans cristallographiques du cristal irradié ;
θ : angle de diffusion, c'est-à-dire l'angle formé entre le rayonnement diffusé analysé et le faisceau incident au cristal irradié
h : constante de Planck,
c : vitesse de la lumière
n : l'ordre de l'interférence:

Cette propriété est exploitée dans des méthodes bien connues, désignées par l'acronyme EDXRD ou "Energie Dispersive X-Ray Diffraction".

WO2008/142446 décrit un procédé de détermination de la composition d'un objet par la détection spectrométrique d'un objet irradié par un rayonnement X. Il est fait référence, dans la description de l'art antérieur de WO2008/142446, à des contrôles de bagages. Le procédé décrit comprend les étapes suivantes :

✔ irradiation de l'objet, notamment à l'aide d'un rayonnement X,

✔ détection de l'intensité transmise à travers l'objet à l'aide d'un détecteur spectrométrique. Il est à noter que le rayonnement étudié ici est le rayonnement transmis par l'échantillon de matériau et non diffracté ; en d'autres termes, l'axe de détection D est confondu avec l'axe X du faisceau incident,

✔ sélection de bandes d'énergies dans le spectre transmis, et établissement de grandeurs de transmission dans chacune de ces bandes,

✔ comparaison d'au moins deux desdites grandeurs obtenues.

Selon un premier mode de réalisation, on cherche à identifier le matériau en détectant la signature d'une diffraction de Bragg. Pour cela, on met en évidence une discontinuité de l'intensité transmise, à une énergie donnée, ou du moins dans une bande d'énergie étroite. Cette discontinuité est supposée correspondre à une baisse localisée de l'amplitude du signal transmis sous l'effet d'une diffusion élastique (diffraction de Bragg) dans le réseau cristallin du matériau analysé. Cette diffusion n'a lieu que pour certaines énergies incidentes Ei discrètes et on considère qu'au voisinage de cette énergie, le signal transmis décroît. Ainsi, en comparant l'intensité du signal transmis à cette énergie dans une bande étroite d'énergie centrée sur Ei avec le signal transmis à une autre énergie, on détecte la présence de tel ou tel matériau. Autrement dit, dans cette demande, on analyse le rayonnement transmis par l'objet, et en particulier les discontinuités dans son spectre en énergie du fait de la diffraction de Bragg.

US20060140340 décrit un dispositif d'identification de substances illicites ou dangereuses, comprenant :

- une source de rayons X (2) associée à un collimateur primaire (3) délivrant un faisceau de section rectangulaire frappant un volume d'inspection (6),
- un détecteur à résolution énergétique (11) associée à un collimateur secondaire (10), lequel détecteur énergétique (11) fournit un spectre en énergie du rayonnement diffracté selon un angle θ par le volume d'inspection,
- un détecteur (13) à résolution spatiale, qui mesure l'intensité du rayonnement transmis,
- un tapis de convoyage 8.

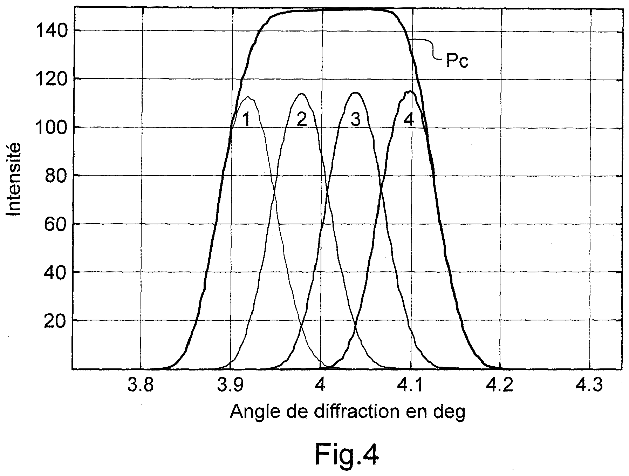

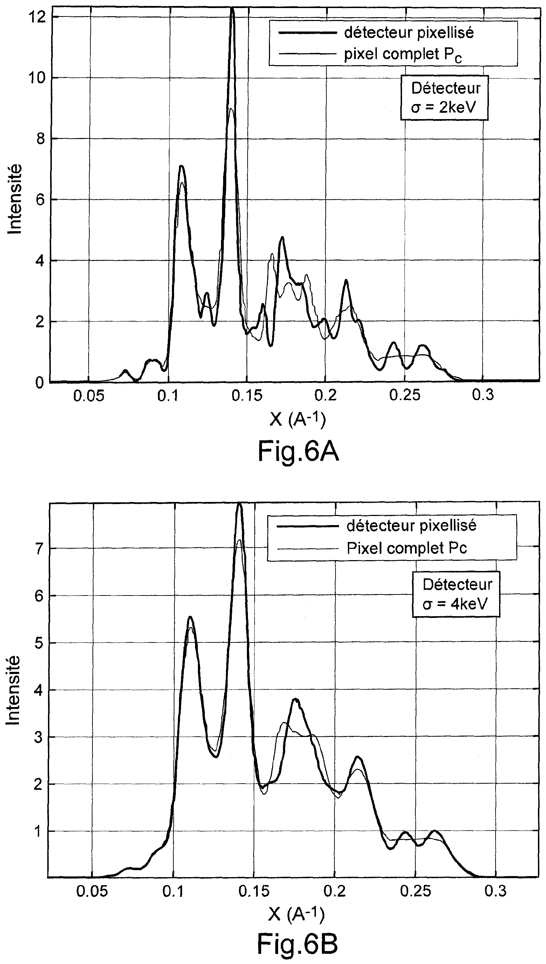

La figure 4a de US20060140340 illustre une première simulation avec un temps d'acquisition suffisamment long pour conférer un bon ration signal sur bruit, mais trop long pour envisager l'utilisation de la méthode pour détecter des produits dangereux ou illicites dans des bagages. Une seconde simulation effectuée avec un temps d'acquisition plus court (compatible avec l'application envisagée, à savoir la détection de produits dangereux ou illicites dans des bagages) fournit un signal dont le ratio signal sur bruit est faible et conduit à l'obtention des figures 6a à 6c de US20060140340, qui sont inexploitables.

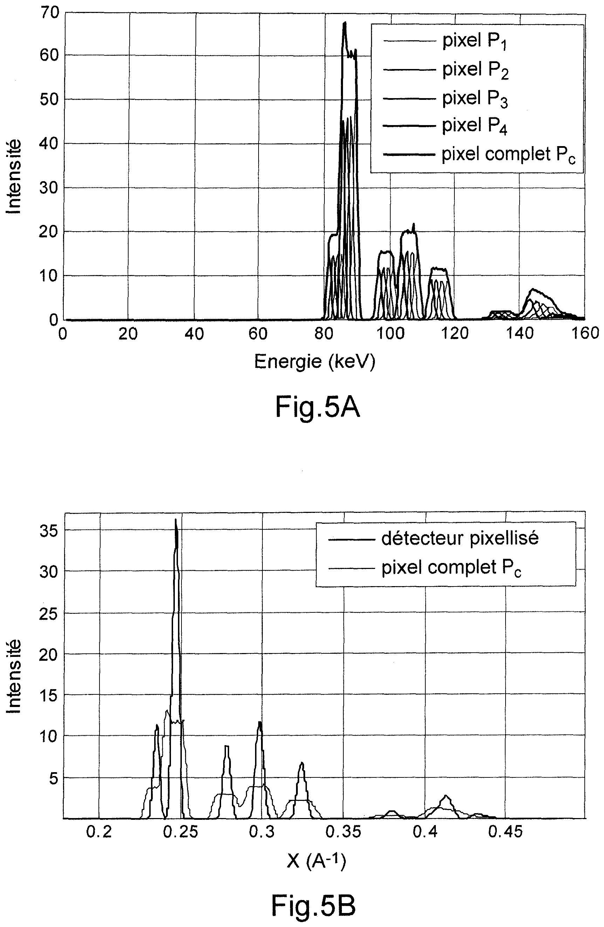

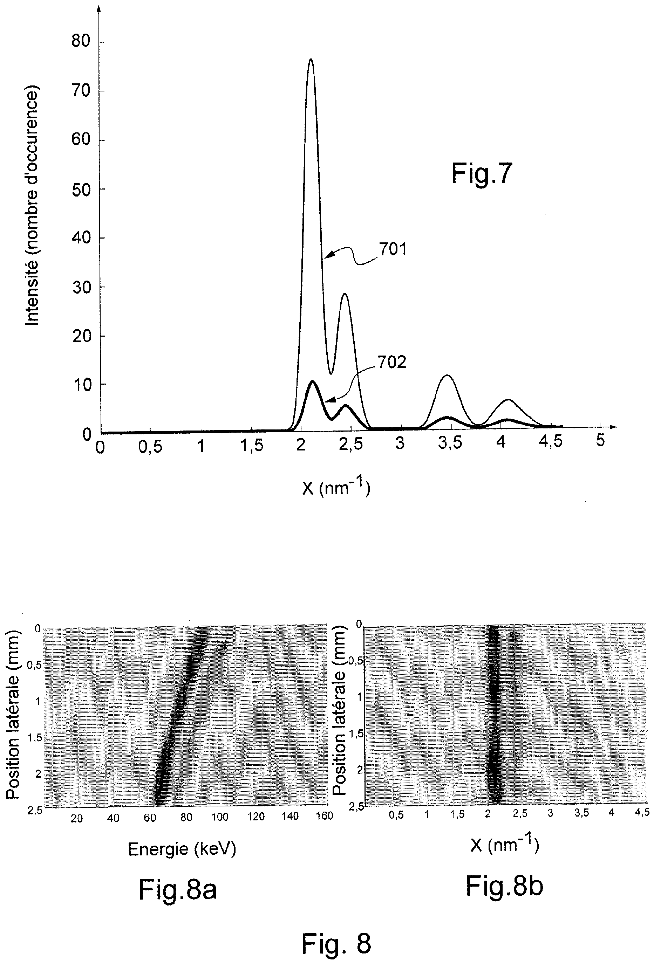

Pour résoudre ce problème, US20060140340 préconise d'acquérir des données de diffraction en une pluralité d'angles de diffraction, soit en déplaçant le détecteur énergétique le long d'un rail (12) suivant un arc de cercle centré sur la source, soit en utilisant une pluralité de détecteurs disposés à des angles de diffraction différents. Chaque spectre obtenu est tout d'abord corrigé en utilisant une correction dérivée d'une méthode de détection d'énergie duale. Puis, la plage d'énergies dans chaque spectre est divisée en une pluralité de plages d'énergies plus étroites. Chaque plage d'énergies étroite correspond à une valeur particulière du moment de transfert. Un modèle de diffraction est ensuite obtenu en ajoutant, point par point, les données correspondant sensiblement aux mêmes valeurs de moment de transfert dans les différents spectres. Les modèles de diffraction ainsi obtenu pour les deux simulations (temps d'acquisition long et court) sont représentés aux figures 5b et 7b, toutes deux exploitables.

La première solution proposée par US20060140340, consistant à déplacer du détecteur le long d'un rail circulaire, a pour conséquence négative de multiplier le temps de traitement par le nombre d'acquisitions effectuées, ce qui n'est pas souhaitable pour l'application concernée. La deuxième solution (multiplication du nombre de détecteurs) conduit à l'obtention d'un diffractomètre encombrant et onéreux.

La technique d'analyse par diffractométrie, et plus généralement par spectrométrie, nécessite la mise en oeuvre d'un détecteur spectrométrique suffisamment résolu en énergie pour permettre la séparation et l'identification des différents pics caractéristiques liés aux matériaux cristallins de l'échantillon.

Généralement, on utilise un détecteur de type Germanium. Ce type de détecteur offre une résolution en énergie très intéressante, mais il doit être refroidi à des températures très faibles, par des procédés complexes et/ou couteux (refroidissement thermoélectrique ou par un réservoir azote liquide). Aussi, les dispositifs d'analyse mettant en oeuvre un tel détecteur sont très encombrants.

L'émergence récente de détecteurs spectrométriques pouvant être utilisés à température ambiante, tels des détecteurs de type CdTe, CdZnTe, ou des matériaux scintillateurs (technologies plus anciennes), offre une alternative intéressante aux détecteurs au Germanium. En effet, ces détecteurs sont compacts, non refroidis et moins onéreux. Cependant, leurs performances en termes de résolution en énergie sont encore inférieures à celles obtenues avec les détecteurs au Germanium.

L'invention vise à pallier ces inconvénients en proposant un procédé et un dispositif dont la résolution en énergie est améliorée, afin d'obtenir une séparation plus nette des pics de diffraction pour une meilleure identification des matériaux.

En diffractométrie, deux paramètres sont essentiels pour disposer d'un système de détection fiable et efficace : la résolution en énergie et la sensibilité. Comme toujours, ces deux paramètres varient inversement : l'amélioration de l'un s'accompagne d'une dégradation de l'autre. Le gain en résolution énergétique obtenu grâce au procédé et au dispositif selon l'invention permet d'envisager d'augmenter la sensibilité, tout en conservant une résolution énergétique très satisfaisante. Pour améliorer la sensibilité, il suffit d'augmenter l'ouverture du collimateur de détection afin de collecter davantage de signal. Mais le champ observé (ou volume d'inspection, défini comme étant le volume, dans l'échantillon de matériau, délimité d'une part par le faisceau incident et d'autre part par l'angle solide sous lequel le détecteur voit l'échantillon de matériau - c'est-à-dire l'angle solide délimité par l'ouverture du collimateur de détection et le plan de détection du détecteur-) est alors plus grand, avec un risque accru de superposition de matériaux, ce qui peut compliquer l'interprétation des spectres obtenus.

L'invention vise à résoudre ce problème additionnel en proposant un procédé et un dispositif particulièrement adaptés à l'analyse d'échantillons comprenant plusieurs couches de matériaux.

Dans ce contexte, l'invention propose un procédé d'analyse d'un échantillon de matériau par diffractométrie conforme à la revendication 1 annexée.

Dans toute la suite, on entend par :

- « *plan de diffraction* », un plan défini par l'axe central du faisceau incident X et l'axe de détection D ;
- « *direction transversale* », une direction orthogonale à l'axe de détection D et contenue dans le plan de diffraction (X, D) ;
- « *position latérale Yi d'un pixel Pi du détecteur* », une coordonnée du pixel virtuel Pi suivant la direction transversale.

Dans une forme de réalisation préférentielle, le détecteur utilisé selon l'invention est pixellisé dans le plan de détection, c'est-à-dire que ses moyens de localisation permettent de définir une partition du plan de détection en pixels virtuels suivant au moins une direction de pixellisation contenue dans le plan de détection, laquelle direction de pixellisation est avantageusement la direction transversale. Avantageusement les moyens de localisation permettent de définir une partition du plan de détection en pixels virtuels suivant deux directions orthogonales dudit plan de détection.

Cette forme préférentielle n'exclut pas la possibilité d'utiliser un détecteur pixellisé dans l'épaisseur, dont les moyens de localisation permettent de définir une partition du matériau détecteur suivant une direction, dite direction de l'épaisseur, orthogonale au plan de détection. Il est également possible d'utiliser un détecteur pixellisé à la fois dans le plan de détection et dans l'épaisseur.

Un détecteur comprend usuellement une pluralité de pixels physiques, chaque pixel physique correspondant à un circuit de collecte de charges par une électrode. Comme défini plus haut, le détecteur utilisé selon l'invention est pixellisé de façon virtuelle, c'est-à-dire en utilisant une information de localisation, au sein de chaque pixel physique, d'une interaction de photon ayant lieu en regard de ce pixel physique. Il est par exemple possible de déterminer les coordonnées (x, y) du barycentre du nuage de charges produit par une interaction, à partir de signaux électriques simultanément générés par cette interaction sur une pluralité d'anodes adjacentes. Cette approche permet de diviser chaque pixel physique en une pluralité de pixels virtuels, dont les dimensions sont moindres. On considère alors que l'interaction a été détectée uniquement par le pixel virtuel correspondant aux coordonnées du barycentre.

L'utilisation d'un détecteur pixellisé à pixels virtuels et la combinaison des spectres en énergie obtenus permettent d'augmenter la résolution angulaire (en affinant l'angle de diffraction observée par un pixel) tout en conservant l'intensité et le rapport signal sur bruit qui auraient été détectés par un détecteur connu. Ainsi, on améliore la résolution en énergie du spectre, par rapport à la résolution d'un spectre obtenu dans la même configuration géométrique en utilisant un détecteur non pixellisé.

En effet, les divers pixels virtuels du détecteur selon l'invention observent des parties différentes du volume d'inspection, avec des angles d'observation $\theta_i$ légèrement différents, ces parties se chevauchant. La plage angulaire qui serait observée par un pixel, dit pixel complet, couvrant la totalité du plan de détection, est bien plus large que la plage angulaire observée par chaque pixel du détecteur selon invention. En d'autres termes, la résolution angulaire du diffractomètre selon l'invention est bien meilleure que la résolution angulaire du pixel complet et donc des diffractomètres connus. Or, les inventeurs ont mis en évidence que la résolution en énergie d'un spectre de diffraction dépend non seulement de la résolution propre en énergie du détecteur, mais aussi de la résolution angulaire, donnée par la géométrie de collimation. Par conséquent, l'utilisation d'un détecteur pixellisé de façon virtuelle (c'est-à-dire d'un détecteur dont les pixels sont de très petite taille) et la combinaison des spectres en énergie obtenus permettent d'améliorer la résolution énergétique finale.

Avantageusement et selon l'invention, le pas entre deux pixels adjacents selon la direction transversale est :

✔ inférieur ou égal à 0,5mm (différence entre $Y_{i+1}$ et $Y_i$), et de préférence inférieur à 0,2mm,

ou inférieur ou égal à 0,2° (différence entre $\theta_{i+1}$ et $\theta_i$), et de préférence inférieur à 0,1°. Avantageusement et selon l'invention, le procédé comprend, préalablement à l'étape de combinaison des spectres, une étape de recalage des spectres mesurés, dans laquelle, on exprime chaque spectre mesuré en fonction d'une nouvelle variable qui prend en compte l'énergie du rayonnement diffusé et l'angle d'observation $\theta_i$ du pixel correspondant. On obtient alors un spectre recalé pour chaque spectre mesuré, c'est-à-dire pour chaque pixel virtuel du détecteur. L'étape de combinaison de spectres porte dans ce cas sur les spectres recalés. Ces derniers sont de préférence combinés par une opération arithmétique.

Ainsi, d'une façon générale, le procédé comprend :

✔ la définition d'une nouvelle variable prenant en compte la longueur d'onde $\lambda$ ou l'énergie E du rayonnement diffusé ainsi que l'angle d'observation $\theta i$ ;
✔ la transformation des spectres mesurés en fonction de cette nouvelle variable ;
✔ une opération arithmétique sur les spectres transformés lors de l'étape précédente.

Par exemple :

✔ dans l'étape de recalage, pour chaque pixel, on établit un spectre recalé en transfert de quantité de mouvement $Si(x)$ à partir du spectre en énergie mesuré pour ledit pixel en effectuant un changement de variable grâce à la formule suivante :

$$x = \frac{\sin(\theta_i / 2)}{\lambda} = \frac{E \sin(\theta_i / 2)}{hc},$$

où $\theta_i$ désigne l'angle d'observation correspondant au pixel Pi de rang i c'est-à-dire l'angle entre l'axe X du faisceau incident et l'axe Di passant par le centre du pixel Pi et le centre du collimateur de détection, et $\lambda$ est la longueur d'onde correspondant à l'énergie E ;

✓ dans l'étape de combinaison, on calcule la somme de l'ensemble ou d'une partie des spectres en transfert de quantité de mouvement ainsi établis.

Le changement de variable proposée selon invention permet de sommer (ou, plus généralement, de combiner de façon arithmétique) directement les spectres Si(x) correspondant à différents pixels virtuels et offre donc une méthode de combinaison des spectres en énergie extrêmement simple, qui peut être mise en oeuvre à l'aide de moyens de calcul peu gourmands en énergie et en mémoire.

L'invention s'étend à un diffractomètre apte à mettre en oeuvre le procédé selon l'invention. En particulier, l'invention propose un diffractomètre conforme à la revendication 9 annexée.

Avantageusement et selon l'invention, le diffractomètre comprend des moyens de calcul, dits moyens de recalage, aptes à établir, pour chaque pixel virtuel du détecteur, un spectre recalé en transfert de quantité de mouvement à partir du spectre en énergie mesuré pour ledit pixel par changement de variable en utilisant par exemple la formule indiquée supra, les moyens de combinaison étant alors adaptés pour sommer ou, de façon plus générale, combiner de façon arithmétique des spectres recalés ainsi établis.

Avantageusement, le procédé et le diffractomètre selon l'invention présentent l'une ou plusieurs des caractéristiques suivantes, toutes les combinaisons possibles étant conformes à l'invention :

✓ le détecteur est du type détecteur à matériau détecteur semi-conducteur, ce qui n'exclut pas la possibilité d'utiliser un détecteur du type détecteur à scintillateur. Les détecteurs à semi-conducteur sont préférés pour leur meilleure résolution en énergie et pour leur plus faible encombrement.
✓ la source est une source polychromatique ;
✓ la source délivre un rayonnement dont l'énergie maximale est comprise entre 10 et 1000 keV, de préférence entre 10 et 200 keV ;
✓ le diffractomètre comprend un collimateur, dit collimateur de source, associé à la source de rayonnement ;
✓ le collimateur de source est qualifié d'étroit selon un axe Y du plan de diffraction orthogonal à l'axe X du faisceau incident et est ouvert selon un axe Z orthogonal au plan de diffraction ;

✓ le collimateur de source est un collimateur à fente rectangulaire unique ;
✓ le collimateur de source présente une épaisseur (dimension selon l'axe X du faisceau incident) de 100 mm et une hauteur de fente (dimension selon l'axe Y) de 0,10 mm ;
✓ l'angle $\theta$ de diffraction est faible ; il est préférentiellement compris entre 2° et 10°, de préférence entre 3° et 6°. L'observation du phénomène de diffraction est plus claire à petit angle, car la diffusion cohérente prédomine pour un moment de transfert petit (le moment de transfert étant proportionnel à $\sin(\theta/2)$).
✓ le collimateur de détection utilisé est un collimateur à fente rectangulaire unique ;
✓ le collimateur de détection est un détecteur qualifié de collimateur étroit selon la direction transversale : il présente une fente rectangulaire ayant une hauteur (dimension selon la direction transversale) faible, par exemple égale à 0,2 mm et une longueur supérieure à 2mm. La faible hauteur de fente du collimateur de détection dans le plan de diffraction (X,D) contribue à l'obtention d'une bonne résolution angulaire car l'angle de diffraction varie fortement dans ce plan selon les matériaux analysés. En revanche, l'angle de diffraction change très peu selon la direction Z orthogonale au plan de diffraction. L'ouverture du collimateur de détection suivant l'axe Z (longueur de fente du collimateur de détection) est intéressante pour augmenter le signal sans perdre en résolution angulaire.

Le gain en résolution énergétique obtenu grâce au procédé et au dispositif selon l'invention permet d'envisager d'augmenter la sensibilité en utilisant un collimateur de détection qualifié de détecteur ouvert selon la direction transversale, pour collecter davantage de signal. Mais, comme indiqué en introduction, le volume d'inspection est alors plus grand, avec un risque accru de superposition de matériaux, ce qui peut compliquer l'interprétation des spectres obtenus.

Afin de résoudre ce problème, l'invention propose un procédé d'analyse d'un échantillon de matériaux dans lequel :

✓ avant combinaison et après recalage éventuel des spectres Si(E) mesurés, on vérifie la réalisation d'au moins un critère, dit critère multimatériau, représentatif de la présence de plusieurs couches de matériau,
✓ on forme des groupes de pixels en utilisant des résultats de l'étape de vérification précédente, chaque groupe correspondant à une couche de matériau, des groupes différents correspondant à des couches de matériau différentes,
✓ l'étape de combinaison s'effectue par groupe, c'est-à-dire que l'on combine les spectres obtenus pour les pixels d'un même groupe, et ce, pour chaque groupe formé.

Le diffractomètre selon l'invention comprend donc de plus :

   ✔ des moyens de vérification de la réalisation d'au moins un critère, dit critère multimatériau, représentatif de la présence de plusieurs couches de matériaux,

   ✔ des moyens de formation de groupes de pixels, chaque groupe correspondant à une couche de matériau, des groupes différents correspondant à des couches de matériau différentes,

   ✔ des moyens de combinaison de spectres par groupe, aptes, pour chaque groupe, à ne combiner sélectivement que les spectres (mesurés ou recalés) obtenus pour les pixels dudit groupe.

De la sorte, il devient possible d'utiliser un collimateur de détection ouvert (c'est-à-dire délimitant le faisceau détecté de manière large selon la direction transversale) pour obtenir un dispositif à la fois sensible, grâce à cette ouverture, et bénéficiant d'une bonne résolution énergétique grâce à la pixellisation virtuelle du détecteur. Avantageusement, dans cette version préférée, le collimateur de détection présente une fente de hauteur supérieure à 1 mm, de préférence supérieure à 2mm, par exemple de l'ordre de 2,5mm. La grande hauteur de fente du collimateur de détection dans le plan de diffraction (X, D) confère une grande sensibilité au dispositif d'analyse mais tend à dégrader ses résolutions angulaire et énergétique ; ce défaut est compensé, grâce à l'invention, par l'utilisation d'un détecteur pixellisé de façon virtuelle et par la combinaison par groupe des différents spectres obtenus.

De préférence, les spectres recalés établis sont des spectres en transfert de quantité de mouvement $S_i(x)$, obtenus grâce à la formule indiquée plus haut. Les moyens de combinaison sont alors aptes à sommer les spectres recalés des pixels d'un même groupe.

Dans toute la suite, on entend par « *position dans un spectre d'un pic énergétique ou d'un maximum local »,* le canal ou l'énergie ou le transfert de quantité de mouvement x (s'il s'agit d'un spectre recalé) correspondant audit pic.

Avantageusement et selon l'invention, chaque critère multimatériau est choisi parmi :

   ✔ une variation significative, par exemple supérieure à 10 %, entre deux pixels adjacents selon la direction transversale, de la position d'un premier maximum local, défini comme étant le premier pic détecté selon l'axe des abscisses dans les spectres recalés ; ce critère est appelé par la suite critère multimatériau du premier maximum local,

   ✔ une variation significative, par exemple supérieure à 10 %, entre deux pixels adjacents selon la direction transversale, de la position d'un second maximum local, défini comme étant le deuxième pic détecté selon l'axe des abscisses dans les spectres recalés ; ce critère est appelé par la suite critère multimatériau du second maximum local.

   ✔ une variation significative, par exemple supérieure à 10%, entre deux pixels adjacents selon la direction transversale, de la somme des canaux du spectre recalé (autrement dit de l'intégrale du spectre recalé, c'est-à-dire de l'aire délimitée par la courbe du spectre recalé et l'axe des abscisses).

De préférence, pour vérifier la réalisation du critère multimatériau du premier (respectivement, second) maximum local défini ci-avant, on construit une courbe représentant, en ordonnées, la position dans le spectre du premier (respectivement, second) maximum local, en fonction, en abscisses, de la position latérale Yi du pixel Pi ou de son angle d'observation θi. Si cette courbe présente au moins un « saut », c'est-à-dire une augmentation ou une diminution de plus de 10% en ordonnées entre deux pixels adjacents, et donc sur une variation en abscisses inférieure à une dimension maximale des pixels selon la direction transversale.

Chaque valeur Yi de la position latérale où intervient un tel saut est utilisée pour la formation des groupes de pixels. Tous les pixels dont la position latérale Yi (ou l'angle de diffraction θi) est comprise entre deux sauts consécutifs sont considérés comme appartenant à un même groupe.

Avantageusement et selon l'invention, les moyens de vérification d'au moins un critère multimatériau sont aptes à vérifier le critère multimatériau du premier maximum local. Dans ce cas, ils sont de préférence aptes à établir une courbe représentant, en ordonnées, la position dans le spectre du premier maximum local, en fonction, en abscisses, de l'angle d'observation θi du pixel Pi ou de la position latérale Yi de celui-ci. Les moyens de formation de groupes de pixels sont alors adaptés pour regrouper dans un même groupe deux pixels Pi et $P_{i+1}$ adjacents selon la direction transversale si et seulement si la différence entre la position du premier maximum local dans le spectre recalé du pixel Pi et la position du premier maximum local dans le spectre recalé du pixel Pi+1 ne varient pas de plus de 10%.

Avantageusement et selon l'invention, les moyens de vérification d'au moins un critère multimatériau sont, en variante ou de plus, aptes à vérifier le critère multimatériau du second maximum local. Dans ce cas, ils sont de préférence aptes à établir une courbe représentant, en ordonnées, la position dans le spectre recalé (du pixel Pi) du second maximum local, en fonction, en abscisses, de l'angle d'observation θi du pixel Pi ou de la position latérale Yi de celui-ci. Les moyens de formation de groupes de pixels sont alors adaptés pour regrouper dans un même groupe deux pixels Pi et $P_{i+1}$ adjacents selon la direction transversale si et seulement si la différence entre la position du second maximum local dans le spectre recalé du pixel Pi et la position du second maximum local dans le spectre recalé du pixel $P_{i+1}$ ne varient pas de plus de 10%.

De préférence, le procédé d'analyse selon l'invention comprend la vérification de la réalisation de deux critères multimatériau.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :

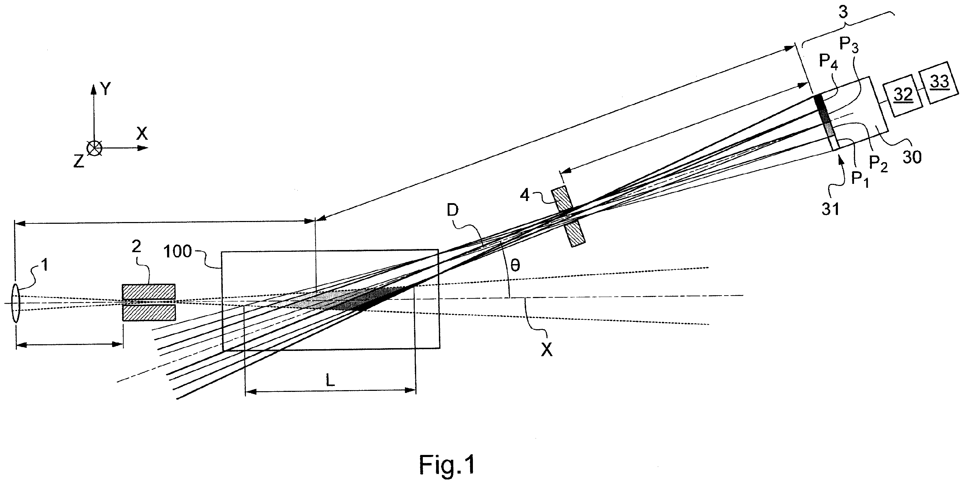

La figure 1 est une vue schématique en coupe dans un plan de diffraction d'un diffractomètre selon l'invention.

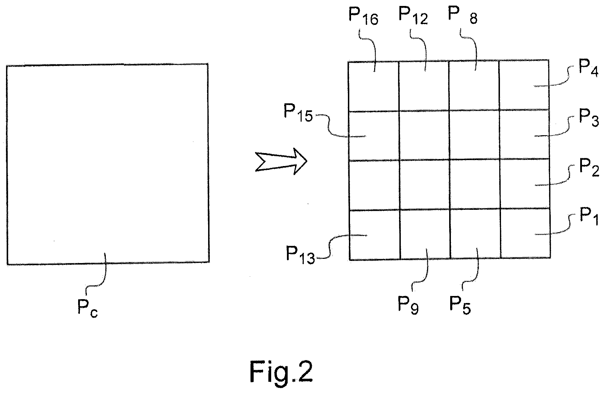

La figure 2 est une vue de face schématique du plan de détection (moitié droite de la figure) du détecteur de la figure 1 et du pixel complet correspondant (moitié gauche de la figure).

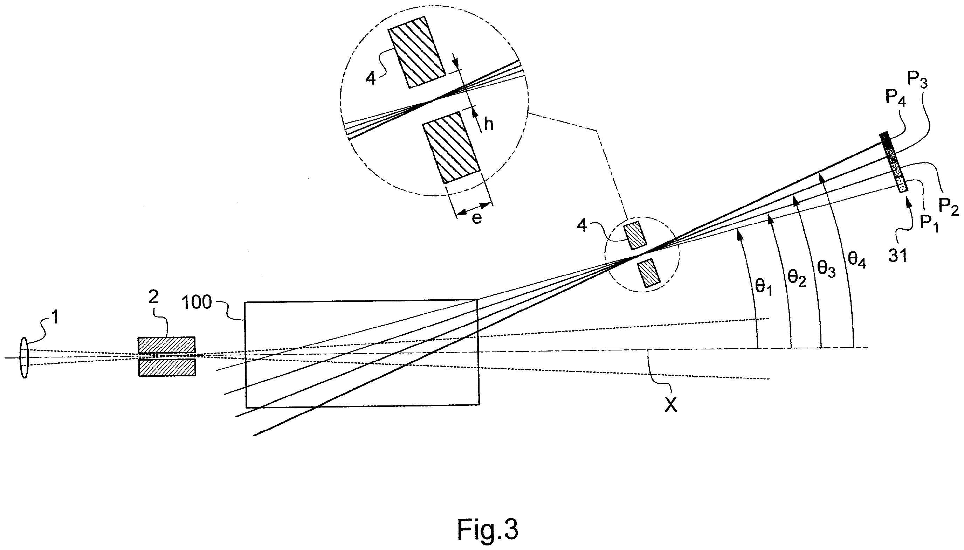

La figure 3 reprend la vue schématique de la figure 1 en y précisant quelques détails.

La figure 4 illustre d'une part la résolution angulaire observée pour chacun des pixels virtuels du diffractomètre à détecteur pixellisé des figues 1 à 3, et d'autre part la résolution angulaire observée pour un pixel complet correspondant à ce diffractomètre ;

La figure 5 représente une simulation des spectres de diffraction qui seraient obtenus pour le graphite par un diffractomètre à détecteur pixellisé selon l'invention et par un pixel complet correspondant à ce détecteur ; Plus précisément, la figure 5A concerne un détecteur supposé parfait c'est-à-dire un détecteur dont la résolution σdet est nulle ; tandis que la figure 5B concerne un détecteur de résolution σdet égale à 2keV.

La figure 6 représente une simulation des spectres de diffraction qui seraient obtenus pour le sucre par un diffractomètre à détecteur pixellisé selon l'invention et par un pixel complet correspondant à ce détecteur. Plus précisément, la figure 6A concerne un détecteur de résolution σdet égale à 2 keV ; tandis que la figure 6B concerne un détecteur de résolution σdet égale à 4 keV.

La figure 7 représente une simulation de deux spectres de diffraction recalés qui seraient obtenus pour un échantillon d'aluminium par un diffractomètre à détecteur pixellisé selon l'invention, en mettant en oeuvre un collimateur délimitant le faisceau détecté respectivement de manière étroite (on parle alors de collimateur étroit) et large (on parle alors de collimateur ouvert) selon l'axe transversal précédemment défini.

La figure 8 représente une simulation de spectres bi-paramétriques en position latérale qui seraient obtenus pour un échantillon d'aluminium par un diffractomètre à détecteur pixellisé selon l'invention avec un collimateur de détection ouvert. La figure 8a représente le spectre bi-paramétrique énergétique mesuré (avant recalage) ; la figure 8b représente le spectre bi-paramétrique recalé.

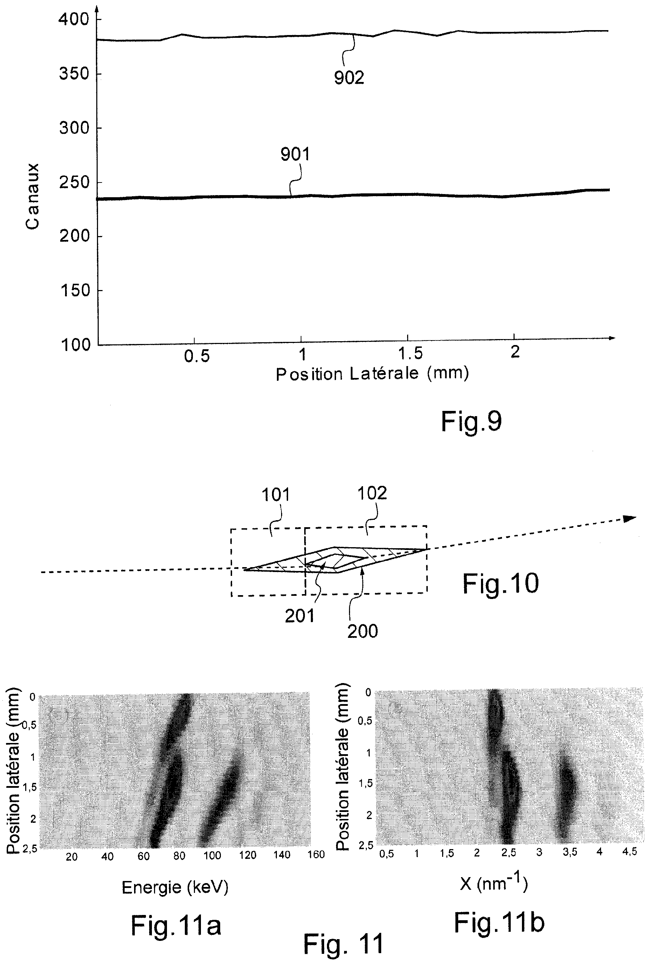

La figure 9 illustre, d'un part une courbe représentant la position du premier maximum local en fonction de la position latérale, et d'autre part une courbe représentant la position du deuxième maximum local en fonction de la position latérale des spectres recalés de la figure 8b.

La figure 10 illustre un échantillon de matériau 100 constitué de deux couches de matériaux, à savoir une couche de graphite et une couche de sel. Les volumes d'inspection observés, respectivement, par un détecteur à collimateur ouvert, et par un détecteur à collimateur étroit sont représentés sur la figure.

La figure 11 représente une simulation de spectres bi-paramétriques en position latérale qui seraient obtenus pour l'échantillon sel/graphite de la figure 10 par un diffractomètre à détecteur pixellisé selon l'invention avec un collimateur de détection ouvert. La figure 11a représente le spectre bi-paramétrique énergétique mesuré (avant recalage) ; la figure 11b représente le spectre bi-paramétrique recalé.

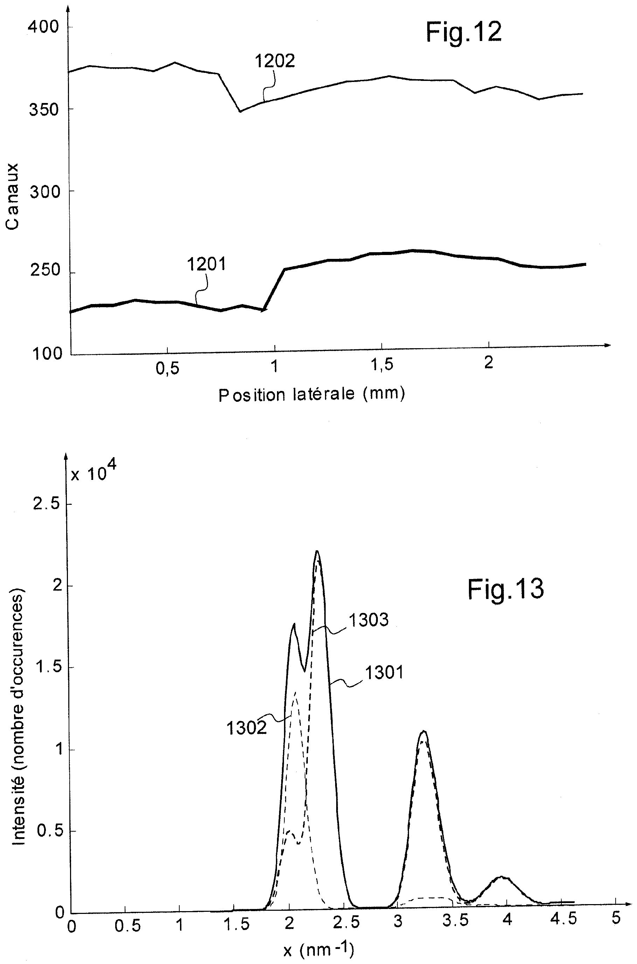

La figure 12 illustre, d'un part une courbe représentant la position du premier maximum local en fonction de la position latérale, et d'autre part une courbe représentant la position du deuxième maximum local en fonction de la position latérale, des spectres recalés de la figure 11b.

La figure 13 représente une simulation de spectres de diffraction recalés qui seraient obtenus pour l'échantillon sel/graphite de la figure 10 par un diffractomètre à détecteur pixellisé selon l'invention et à collimateur de détection ouvert. Un premier spectre correspond au spectre obtenu par combinaison de l'ensemble des spectres des pixels du détecteur ; un deuxième spectre correspond au spectre obtenu par combinaison des spectres des pixels du détecteur ayant une position latérale comprise entre 0 et 1 mm ; le troisième spectre correspond au spectre obtenu par combinaison des spectres des pixels du détecteur ayant une position latérale comprise entre 1 mm et 2,5mm.

La figure 1 illustre un diffractomètre selon l'invention. Celui-ci comprend tout d'abord une source 1 polychromatique d'énergie comprise entre quelques dizaines de keV et quelques centaines de keV, par exemple entre 10 keV et 200 keV. Cette source 1 émet un rayonnement qui est collimaté à l'aide d'un collimateur de source 2, ce dernier pouvant être réalisé en tungstène ou alliage de tungstène. En l'exemple non limitatif illustré, ce collimateur de source 2 possède une unique fente rectangulaire et a une épaisseur de 100 mm et une hauteur de fente inférieure à 0,5 mm ; par exemple égale à 0,1 mm. Il est disposé à une distance de la source 1 égale à 140 mm. La source polychromatique 1 et le collimateur de source 2 génèrent un faisceau incident d'axe X. Le diffractomètre selon l'invention présente ensuite un logement d'accueil d'un échantillon de matériau 100, ce logement étant formé de façon à ce que l'échantillon de matériau soit irradié par le faisceau incident généré par la source 1 et le collimateur de source 2. Le diffractomètre selon l'invention comprend de plus un collimateur de détecteur 4 et un détecteur 3, alignés selon un axe de détection D formant avec l'axe X du faisceau incident un angle θ égal ici à 4°(l'échelle n'étant pas respectée dans les figures annexées).

Le détecteur 3 comprend d'une part un matériau détecteur 30, qui présente, en regard du collimateur de détecteur 4, un plan de détection 31, et d'autre part des moyens électroniques et informatiques de traitement 32 et 33. De préférence, le matériau détecteur 30 utilisé ici est un matériau semi-conducteur tel qu'un matériau à base de CdTe, CdZnTe (CZT), silicium (Si) ou Hgl2, susceptible d'être polarisé par une cathode et une anode, disposées sur deux faces opposées du matériau semi-conducteur. On peut également mettre en oeuvre un détecteur au Germanium, en dépit des contraintes précédemment décrites. Lorsqu'un photon pénètre dans le matériau semi-conducteur 30 et interagit avec celui-ci, tout ou partie de son énergie est transférée à des porteurs de charges (couples électron/trou) dans le matériau semi-conducteur. Le détecteur étant polarisé, les porteurs de charges migrent vers les électrodes (dont l'anode). Ils produisent alors un signal électrique aux bornes des électrodes. Ce signal électrique, dont l'amplitude est proportionnelle à l'énergie déposée par le photon lors de l'interaction, est collecté puis traité par les moyens informatiques 32 et 33. Le signal est de préférence collecté uniquement à l'anode ; il peut en variante être collecté uniquement à la cathode, ou aux deux électrodes. Un détecteur à matériau semi-conducteur comprend usuellement une pluralité de pixels physiques, chaque pixel physique correspondant à un circuit de collecte de charges par une électrode. Le pixel complet Pc illustré à la figure 2 correspond à un pixel physique des diffractomètres connus,

Selon l'invention, le détecteur 3 est un détecteur pixellisé de façon virtuelle afin d'obtenir une pixellisation fine et une amélioration importante de la résolution angulaire, ce qui implique que le plan de détection 31 du matériau semi-conducteur 30 est doté de pixels physiques divisés en pixels virtuels $P_i$. (cf. figures 1 à 3).

En l'exemple illustré, le plan de détection 31 présente quatre colonnes de pixels comportant chacune quatre pixels ($P_1$ à $P_4$ pour la première colonne, $P_5$ à $P_8$ pour la deuxième, etc.) qui se succèdent selon la direction transversale T orthogonale à l'axe de détection D. Seuls quatre lignes de pixels (et quatre colonnes) sont ici représentés par souci de clarté, mais il peut bien sûr y en avoir plus. Chacun de ces pixels virtuels $P_i$ observe un volume de matériau de longueur (selon l'axe X) égale à 17,5 mm et détecte le rayonnement diffracté selon un angle moyen $\theta_i$ que l'on peut observer plus aisément à la figure 3, c'est-à-dire le rayonnement diffracté entre les angles $\theta_i$-δθ/2, et $\theta_i$-δθ/2 avec δθ de l'ordre de 0,2°, comme illustré à la figure 4. Un pixel complet Pc correspondant aux seize pixels $P_1$ à $P_{16}$ du détecteur du diffractomètre selon l'invention détecterait le rayonnement diffracté autour de 4° sur une plage d'angles de diffraction trois fois plus large que celle affectée à chaque pixel $P_i$, le critère retenu pour quantifier la largeur d'un pic étant ici la largeur à mi-hauteur de ce pic.

Il en résulte que la résolution angulaire du détecteur du diffractomètre à détecteur pixellisé selon invention est bien meilleure que celle d'un diffractomètre connu dont le détecteur serait doté du pixel complet Pc. Ceci se traduit directement par un gain en résolution énergétique du détecteur.

La pixellisation du plan de détection 31 est ici obtenue de façon virtuelle. Une simple diminution de la taille des pixels physiques poserait en effet divers problèmes. En particulier, les coûts de fabrication seraient considérablement augmentés ; la multiplication des voix électroniques de traitement grèverait aussi les coûts de fabrication et conduirait à l'obtention d'un dispositif encombrant. La pixellisation du plan de détection 31 peut être obtenue de façon virtuelle en utilisant une information de localisation, au sein de chaque pixel physique, d'une interaction de photon ayant lieu en regard de ce pixel. Comme l'enseigne la publication "*An approach to sub-pixel spatial resolution in room temperature X-ray detector arrays with good energy resolution*" (W.K. Warburton), il est par exemple possible de déterminer les coordonnées (x, y) du barycentre du nuage de charges produit par une interaction, à partir de signaux électriques simultanément générés par cette interaction sur une pluralité d'anodes adjacentes. Cette approche permet de diviser chaque pixel physique en une pluralité de pixels virtuels dans le plan de détection. On considère alors que l'interaction a été détectée uniquement par le pixel virtuel correspondant aux coordonnées du barycentre. Sans une telle méthode, seules les coordonnées du pixel physique ayant collecté le signal maximal sont utilisées.

Le diffractomètre selon l'invention illustré aux figures 1 à 3 permet d'observer, dans l'échantillon de matériau 100, un volume d'inspection de longueur L qui dépend de l'ouverture du collimateur de détecteur 4. Si le collimateur de détecteur 4 est un collimateur étroit, présentant par exemple une hauteur de fente de 0,4mm, ce qui correspond à une plage de diffraction Δθ de 0,3°, le volume d'inspection est de 63,5mm$^3$ et la longueur d'inspection (selon l'axe X) de 43mm. Si le collimateur de détecteur 4 est un collimateur ouvert, présentant par exemple une hauteur de fente de 2,5mm, ce qui correspond à une plage de diffraction Δθ de 1,6°, le volume d'inspection est de 210mm$^3$ et la longueur d'inspection de 139mm. L'utilisation d'un tel détecteur ouvert peut ici être envisagée grâce au gain en résolution obtenu par l'utilisation d'un détecteur pixellisé de façon virtuelle.

La figure 5A illustre les spectres en énergie obtenue par simulation pour chacun des pixels $P_1$ à $P_4$ du détecteur et pour le pixel complet Pc correspondant à ce détecteur. La figure 5B représente la combinaison selon invention, par les moyens de combinaison 33, des spectres en énergie obtenus pour les différents pixels $P_i$. Préalablement à cette combinaison, on effectue avantageusement un recalage consistant de préférence en :

✔ un changement de variable permettant de passer, pour chaque pixel Pi de rang i constituant le détecteur, ce dernier correspondant au pixel complet Pc, d'un spectre en énergie à un spectre en transfert de quantité de mouvement (l'utilisation d'une autre variable est toutefois possible). On rappelle qu'un spectre en énergie est un diagramme représentant le nombre d'interactions de photon constatées en fonction de l'énergie E, exprimée en keV, libérée par l'interaction ; tandis qu'un spectre en transfert de quantité de mouvement est un diagramme représentant le nombre d'interactions constatées en fonction du transfert de quantité de mouvement x, exprimée en nm$^{-1}$, de l'interaction. Comme précédemment observé, la nouvelle variable x est obtenue en fonction de l'énergie E et de l'angle d'observation θi correspondant au pixel Pi de rang i. Par exemple, ce changement de variable est régi par l'équation suivante :

$$x = \frac{\sin(\theta_i/2)}{\lambda} = \frac{E\sin(\theta_i/2)}{hc}$$

Du fait du changement de variable, chaque spectre Si(E) correspondant à un pixel de rang i est transformé en un spectre Si(x).
✔ la somme de tous les spectres ainsi transformés, c'est-à-dire de tous les spectres Si(x) en transfert de quantité de mouvement préalablement établis.

Comme on peut l'observer sur la figure 5B cette combinaison (recalage et somme des spectres), associée à la pixellisation virtuelle du détecteur (qui augmente la quantité de signaux générés, pour un même angle de diffraction), permet, par rapport au spectre obtenu par un pixel complet, d'obtenir des pics de diffraction plus intenses et plus étroits, avec des vallées plus profondes, ce qui facilite l'identification de ces raies caractéristiques. En d'autres termes, la résolution en énergie est nettement améliorée. Dans le même temps, on constate que l'aire délimitée par la courbe du spectre du détecteur pixellisé est sensiblement la même que celle délimitée par le spectre du pixel complet. La sensibilité (quantité totale de photons détectés) est donc conservée, ce qui a priori semble incompatible avec un gain en résolution énergétique, l'amélioration d'un de ces paramètres se traduisant généralement par la détérioration de l'autre. On remarquera également que, s'agissant ici de simulation, aucun bruit de fond n'apparaît sur les spectres illustrés. L'homme du métier comprendra aisément que dans le cas de spectres mesurés, avec un bruit de fond, l'invention permet même de gagner simultanément en sensibilité (du fait d'une limite de détection diminuée) et en résolution énergétique.

La figure 7 représente une simulation de deux spectres de diffraction. Un premier spectre 702 est obtenu pour un échantillon d'aluminium par le diffractomètre des figures 1 à 3, en utilisant un collimateur étroit (h=0,4mm). Un deuxième spectre 701 est obtenu sur le même échantillon, en utilisant un collimateur ouvert (h=2,5mm). Afin de ne pas dégrader la résolution énergétique, ces spectres sont recalés.

Comme on peut le constater à l'examen de cette figure, les pics de diffraction obtenus avec le collimateur de détection ouvert sont bien plus grands et plus lisibles que ceux obtenus avec le collimateur de détection étroit. Cette figure illustre le gain en sensibilité obtenu en passant d'un collimateur étroit à un collimateur ouvert, et ce sans perte en résolution énergétique. L'utilisation d'un détecteur pixellisé de façon fine et virtuelle permet donc d'envisager l'ouverture de la collimation afin d'améliorer la sensibilité du dispositif, car elle compense la perte en résolution énergétique des pics de diffraction qui s'en suit.

Cependant, l'ouverture du collimateur de détection s'accompagne d'un élargissement du volume inspecté ; le risque est alors grand que le volume d'inspection comporte plusieurs couches de matériaux, comme l'illustre la figure 10. Cette figure 10 représente un échantillon de matériau 100 comprenant une couche 101 de graphite et une couche 102 de sel. Le volume d'inspection 201 est celui observé par le collimateur étroit (h=0,4mm) ; il ne comprend que du sel. Le volume d'inspection 200 correspond à celui observé par le collimateur ouvert (h=2,5mm), il comprend du graphite et du sel.

Une deuxième caractéristique importante de l'invention est la combinaison des spectres par groupe qui permet de contourner le problème de la confusion des matériaux dans les spectres obtenus.

Préalablement à cette combinaison, il est avantageux d'effectuer un recalage des spectres énergétiques mesurés comme précédemment expliqué.

La figure 8a représente des spectres en énergie mesurés pour un échantillon monomatériau entièrement constitué d'aluminium. La figure 8b représente les spectres recalés correspondants. Il s'agit ici de représentations qualifiées de bi-paramétriques. L'axe des abscisses de la figure 8a représente, de façon usuelle en spectrométrie, l'énergie E libérée par les interactions de photon détectées. L'axe des abscisses de la figure 8b représente le transfert de quantité de mouvement x. Mais, de façon originale, l'intensité énergétique (c'est-à-dire le nombre d'interactions détectées pour chaque énergie ou pour chaque transfert de quantité de mouvement) n'est pas représentée sur l'axe des ordonnées mais à l'aide de nuances de gris. Les zones claires du graphique traduisent une faible intensité, à l'inverse des foncées qui correspondent aux pics de diffraction. L'axe des ordonnées peut alors être utilisé pour un autre paramètre, à savoir la position latérale Yi du pixel Pi dans le détecteur (position selon la direction transversale T). Il est ainsi représenté, sur une même figure l'ensemble des spectres énergétiques mesurés (figure 8a) ou recalés (figure 8b) obtenus pour tous les pixels du détecteur : à chaque ordonnée correspond le spectre d'un pixel. Balayer visuellement l'axe des ordonnées revient à se déplacer dans le détecteur selon la direction T. Pour mieux comprendre la représentation adoptée, il suffit de l'imaginer en trois dimensions. Une « coupe » du graphique à une position latérale Y donnée correspond à un spectre en énergie « 2D classique » tel ceux de la figure 3.

La figure 8 illustre les spectres mesurés et recalés obtenus pour un échantillon monomatériau constitué intégralement d'aluminium. La figure 11 illustre les spectres mesurés et recalés obtenus pour un échantillon multimatériau comprenant une couche de graphite et une couche de sel ; il s'agit de l'échantillon 100 illustré à la figure 10.

La combinaison des spectres recalés s'effectuant par groupe dans une version préférée de l'invention, il convient alors de former des groupes de pixels en fonction des couches de matériaux présentes dans l'échantillon.

Pour cela, il y a lieu, tout d'abord, de déterminer si l'échantillon comporte plusieurs couches de matériaux différents. À cette fin, on vérifie la réalisation d'un ou de plusieurs critères multimatériau représentatifs de la présence de plusieurs couches de matériaux. L'un de ses critères peut être la variation dans les spectres recalés de la position du premier maximum local.

Dans les spectres bi-paramétriques des figures 8 et 11, le premier maximum local peut être repéré par les nuances de gris utilisées : le gris le plus foncé correspond au pic de diffraction de plus grande intensité. Le premier maximum local pour un pixel donné correspond donc à la première zone de gris foncé entourée de gris plus clair que l'on rencontre en balayant le spectre selon l'axe des abscisses à ordonnée constante.

Dans les spectres de la figure 8 qui correspondent à un échantillon monomatériau, on constate que la position du premier maximum local ne varie pas ou varie peu en fonction de la position latérale : les zones de gris le plus intense sont alignées verticalement ; elles correspondent à un même transfert de quantité de mouvement pour tous les pixels.

Dans les spectres de la figure 11 qui correspondent à un échantillon multimatériau graphite/sel, on constate que la position du premier maximum local varie selon les pixels. On observe que, pour les pixels dont la position latérale est comprise entre 0 et environ 1mm (partie supérieure de la figure), le premier maximum local est obtenu pour un transfert de quantité de mouvement x de l'ordre de 2nm$^{-1}$, alors que pour les pixels dont la position latérale est supérieure à 1 mm (partie basse de la figure), le premier maximum local est obtenu pour un transfert de quantité de mouvement x de l'ordre de 2,3nm$^{-1}$.

Pour déterminer avec plus de certitude et de précision si un changement de position du premier maximum local a lieu et, le cas échéant, à quelle position latérale Yi (c'est-à-dire à quel pixel Pi) il a lieu, on construit une courbe représentant la position du premier maximum local en fonction de la position latérale.

Cette courbe 901 est reportée à la figure 9 pour l'échantillon monomatériau en aluminium ; elle confirme que la position du premier maximum local varie peu en fonction des pixels : la courbe 901 obtenue est relativement plate.

La courbe est visible à la figure 12 pour l'échantillon multimatériau graphite/sel. La courbe 1201 obtenue présente une pente importante pour une position latérale proche de 1 mm (de l'ordre de 0,9): la position du premier maximum local varie (baisse) alors de plus de 10% en moins de 0,2mm.

Pour confirmer ou éventuellement affiner ces résultats, il est avantageux de vérifier la réalisation d'un deuxième critère multimatériau, par exemple d'étudier aussi la variation de la position du second maximum local. Les courbes correspondantes sont obtenues et représentées respectivement à la figures 9 (courbe (902) et à la figure 12 (courbe 1202) de façon similaire à celles relatives au premier maximum local. Dans le cas de l'échantillon monomatériau (figure 9), on retrouve une courbe s'approchant d'une droite de pente nulle. Dans le cas de l'échantillon multimatériau graphite/sel (figure 12), on observe à nouveau un saut significatif pour une position latérale Yi égale à 1 mm.

Les positions latérales autour desquelles une variation significative (saut des courbes 1201, 1202) de la position du premier et/ou du second maximum local est observée, sont enregistrées comme constituant les bornes des groupes de pixels. Ainsi, dans l'exemple de l'échantillon multimatériau graphite/sel de la figure 6, tous les pixels dont la position latérale est comprise entre 0 et 1 mm sont considérés comme appartenant à premier groupe représentatif d'un premier matériau (en l'occurrence, le graphite) ; les pixels dont la position latérale est supérieure à 1mm sont considérés comme appartenant à un deuxième groupe représentatif d'un deuxième matériau (en l'occurrence, le sel). Dans l'exemple de l'échantillon monomatériau en aluminium, les critères multimatériau n'étant pas vérifiés (ce qui signifie qu'un seul matériau a été décelé), un seul groupe contenant tous les pixels du détecteur est formé.

Les spectres recalés sont ensuite sommés par groupe.

La figure 13 illustre trois combinaisons de spectres en transfert de quantité de mouvement obtenues pour l'échantillon multimatériau graphite/sel de la figure 10 : le spectre 1301 correspond à la somme des spectres recalés de tous les pixels du détecteur; le spectre 1302 correspond à la somme des spectres recalés des pixels du premier groupe défini ci-avant (groupe correspondant au graphite) ; le spectre 1303 correspond à la somme des spectres recalés des pixels du deuxième groupe défini ci avant (groupe correspondant au sel).

Comme on peut l'observer sur cette figure 13, la combinaison (somme après recalage) par groupe, associée à la pixellisation virtuelle du détecteur (qui augmente la quantité de signaux générés), permet, par rapport au spectre 1301 obtenu pour le détecteur entier :

- de séparer les pics en groupes, ce qui permet de faciliter l'interprétation des spectres : on évite ainsi de considérer que deux pics qui sont en réalité dus à deux matériaux distincts, correspondent à un seul matériau, et donc de se tromper dans l'identification du ou des matériaux en présence.
- d'obtenir des pics de diffraction plus intenses et plus étroits, avec des vallées plus profondes, ce qui facilite l'identification des raies caractéristiques. En d'autres termes, la résolution en énergie est nettement améliorée.

On remarquera également que, s'agissant ici de simulations, aucun bruit de fond n'apparaît sur les spectres illustrés. L'homme du métier comprendra aisément que dans le cas de spectres réellement mesurés, avec un bruit de fond, l'invention permet même de gagner simultanément en sensibilité (du fait d'une limite de détection diminuée) et en résolution énergétique, et qu'elle permet de plus, dans sa version préférée, de déceler la présence de plusieurs matériaux et d'en définir avec fiabilité la nature.

L'invention peut faire l'objet de nombreuses variantes par rapport au mode de réalisation illustré, dès lors que ces variantes entrent dans le cadre délimité par les revendications. En particulier, le détecteur peut être constitué d'un nombre plus grand de pixels virtuels répartis selon plusieurs directions, par exemple selon deux directions dans le plan de détection (comme dans l'exemple illustré), plus éventuellement la direction de l'épaisseur. La diffraction selon un angle θ donné ayant lieu dans toutes les directions autour de l'axe X du faisceau incident suivant un cône (d'angle θ), la pixellisation du plan de détection selon deux directions orthogonales permet d'affiner la résolution angulaire sur l'ensemble de la portion de ce cône captée par le détecteur et d'augmenter plus encore la quantité de signal disponible et traité. D'une façon générale, le rang i du pixel Pi varie donc entre 1 et Imax, Imax étant le nombre de pixels virtuels que comporte le plan de détection.

Dans l'exemple décrit ci-avant, le critère multimatériau est établi en déterminant la position des premiers ou seconds pics sur les spectres recalés. D'autres types de critères peuvent être mis en oeuvre. Par exemple, on peut déterminer l'intégrale $I_i$, c'est-à-dire la somme des canaux, de chaque spectre Si obtenu et conclure à la présence de plusieurs matériaux lorsque cette intégrale varie significativement, par exemple de plus de 10%, entre deux pixels adjacents.

En outre, la géométrie du diffractomètre n'est pas limitée aux valeurs numériques fournies ci-avant. Par ailleurs, d'autres méthodes de combinaison de spectres, portant sur des spectres recalés en fonction d'une variable (qui dépend de l'énergie E ou de la longueur d'onde λ, ainsi que de l'angle de diffraction) autre que le transfert de quantité de mouvement, peuvent être utilisées.

L'invention peut faire l'objet de nombreuses variantes par rapport au mode de réalisation illustré, dès lors que ces variantes entrent dans le cadre délimité par les revendications. En particulier, le détecteur peut être constitué de pixels répartis selon plusieurs directions, par exemple selon deux directions dans le plan de détection, tel qu'illustré à la figure 2, plus éventuellement la direction de l'épaisseur. La diffraction selon un angle θ donné ayant lieu dans toutes les directions autour de l'axe X du faisceau incident suivant un cône (d'angle θ), la pixellisation du plan de détection selon deux directions orthogonales permet d'affiner la résolution angulaire sur l'ensemble de la portion de ce cône captée par le détecteur et d'augmenter plus encore la quantité de signal disponible et traité. D'une façon générale, le rang i du pixel $P_i$ varie donc entre 1 et $I_{max}$, $I_{max}$ étant le nombre de pixels, virtuels ou physiques, constituant le détecteur dans la zone délimitée par l'angle solide sous lequel le détecteur voit le volume d'inspection.

En outre, la géométrie du diffractomètre n'est pas limitée aux valeurs numériques fournies ci-avant. Le degré de pixellisation (fractionnement du pixel complet) du détecteur selon invention peut être supérieur ou éventuellement inférieur à celui illustré à la figure 2. Par ailleurs, D'autres méthodes de combinaison des spectres en énergie peuvent être utilisées, la méthode proposée dans l'exemple illustré présentant l'avantage d'être simple et rapide.

**Revendications**

1. Procédé d'analyse d'un échantillon de matériau (100) par diffractométrie, dans lequel :

   ✓ on utilise un diffractomètre comprenant

      ♦ une source (1) apte à émettre un faisceau incident d'axe central X,
      ♦ un détecteur (3) comprenant

         ◦ un matériau détecteur (30), qui présente, du côté de l'échantillon de matériau, un plan (31) dit plan de détection,
         ◦ des moyens (32), dits moyens de mesure spectrométrique, apte à mesurer une énergie libérée par chaque interaction de photon avec le matériau détecteur et à établir au moins un spectre en énergie, noté S(E) ;

      ♦ un collimateur (4), dit collimateur de détection, associé au détecteur (3), le détecteur et le collimateur de détection étant agencés de façon à présenter un axe de détection D formant avec l'axe central X du faisceau incident un angle de diffraction θ,

✓ on irradie l'échantillon (100) avec le faisceau incident
✓ on établit une pluralité de spectres en énergie, que l'on combine,

**caractérisé en ce que** :

✓ le détecteur utilisé est un détecteur pixellisé, comprenant des moyens de localisation d'une interaction d'un photon avec le matériau détecteur, permettant d'une part de définir une partition du détecteur en pixels virtuels , et d'autre part d'associer l'un desdits pixels virtuels à chaque interaction de photon ;
✓ pour chaque pixel virtuel (Pi) du détecteur, on établit un spectre en énergie Si(E), dit spectre mesuré,
✓ la combinaison porte sur des spectres mesurés pour différents pixels virtuels (Pi) du détecteur,
✓ avant combinaison, on vérifie la réalisation d'au moins un critère, dit critère multimatériau, représentatif de la présence de plusieurs couches de matériaux,
✓ on forme des groupes de pixels en utilisant des résultats de l'étape de vérification précédente, chaque groupe correspondant à une couche de matériau, des groupes différents correspondant à des couches de matériau différentes,
✓ l'étape de combinaison s'effectue par groupe, c'est-à-dire qu'on combine les spectres obtenus pour les pixels (Pi) d'un même groupe, et ce, pour chaque groupe formé.

2. Procédé selon la revendication 1, **caractérisé en ce que** le détecteur utilisé est pixellisé dans le plan détection.

3. Procédé selon l'une des revendications précédentes, **caractérisé en ce que** le pas entre deux pixels adjacents selon une direction transversale orthogonale à l'axe de détection D et contenue dans un plan de diffraction (X, D), est inférieur ou égal à 0,5mm ou à 0,2°.

4. Procédé selon l'une des revendications précédentes, **caractérisé en ce que** préalablement à l'étape de combinaison et préalablement à l'étape de vérification du critère multimatériau, on effectue une étape de recalage des spectres mesurés, dans laquelle, on exprime chaque spectre Si(E) mesuré en fonction d'une nouvelle variable (x) qui prend en compte l'énergie du rayonnement diffusé et l'angle d'observation θ$_i$ du pixel correspondant, on obtient ainsi un spectre recalé Si(x) pour chaque pixel (Pi) du détecteur.

5. Procédé selon les revendications précédentes, **caractérisé en ce que** :

✓ dans l'étape de recalage, les spectres recalés établis sont des spectres Si(x) en transfert de quantité de mouvement, le changement de variable étant effectué en utilisant la formule suivante :

$$x = \frac{\sin(\theta_i/2)}{\lambda} = \frac{E\sin(\theta_i/2)}{hc} \quad ,$$

où θi désigne l'angle de diffraction correspondant au pixel i c'est-à-dire l'angle entre l'axe X du faisceau incident et l'axe Di passant par le centre du pixel Pi et le centre du collimateur de détection, et λ est la longueur d'onde correspondant à l'énergie E ;
✓ dans l'étape de combinaison, pour chaque groupe, on somme les spectres recalés Si(x) des pixels dudit groupe.

6. Procédé selon l'une des revendications précédentes, **caractérisé en ce que** le critère multimatériau est choisi parmi :

✓ une variation supérieure à 10 % de la position dans les spectres recalés d'un premier maximum local, entre deux pixels adjacents selon une direction transversale (T), orthogonale à la direction (D) de détection
✓ une variation supérieure à 10 %, de la position dans les spectres recalés d'un second maximum local, entre deux pixels adjacents selon la direction transversale.
✓ une variation supérieure à 10% de la somme des canaux du spectre recalé de chaque pixel, entre deux pixels adjacents selon la direction transversale.

7. Procédé selon la revendication 6, **caractérisé en ce qu'**on construit une courbe représentant, en ordonnées, la position dans le spectre du premier ou du second maximum local, en fonction, en abscisses, de la position latérale (Yi) du pixel (Pi) ou de son l'angle d'observation θi.

8. Procédé selon l'une des revendications précédentes, **caractérisé en ce que** le collimateur de détection (4) est un collimateur ouvert présentant une fente ayant une hauteur supérieure à 1 mm.

9. Diffractomètre comprenant :

♦ une source (1) apte à émettre un faisceau incident d'axe central X,
♦ un détecteur (3) comprenant

○ un matériau détecteur (30), qui présente, du côté de l'échantillon de matériau, un plan dit plan de détection,
○ des moyens (32), dits moyens de mesure spectrométrique, configurés pour mesurer une énergie libérée par chaque interaction de photon avec le matériau détecteur et pour établir au moins un spectre en énergie ;

♦ un collimateur (4), dit collimateur de détection, associé au détecteur, le détecteur et le collimateur de détection étant agencés de façon à présenter un axe de détection D formant avec l'axe central X du faisceau incident un angle de diffraction θ,

○ des moyens (33) de combinaison de spectres,
**caractérisé en ce que** :

✔ le détecteur est un détecteur pixellisé comprenant des moyens de localisation d'une interaction d'un photon avec le matériau détecteur, permettant d'une part de définir une partition du détecteur en pixels virtuels, et d'autre part d'associer l'un desdits pixels virtuels à chaque interaction de photon ;
✔ les moyens de mesure spectrométrique (32) sont configurés pour" établir un spectre en énergie mesuré Si(E) pour chaque pixel (Pi) du détecteur,
✔ les moyens (33) de combinaison sont "configurés pour" combiner des spectres en énergie Si(E) obtenus pour différents pixels Pi du détecteur, et **en ce que** le diffractomètre comprend de plus :

✔ des moyens (33) de vérification de la réalisation d'un au moins un critère, dit critère multimatériau, représentatif de la présence de plusieurs couches de matériaux,
✔ des moyens (33) de formation de groupes de pixels, chaque groupe correspondant à une couche de matériau, des groupes différents correspondant à des couches de matériau différentes,
✔ les moyens de combinaison (33) étant configurés pour combiner des spectres par groupe, c'est-à-dire pour combiner, pour chaque groupe, les spectres obtenus pour les pixels dudit groupe.

**10.** Diffractomètre selon la revendication 9, **caractérisé en ce que** le détecteur est pixellisé dans le plan détection.

**11.** Diffractomètre selon l'une des revendications 9 ou 10, **caractérisé en ce que** le pas entre deux pixels adjacents selon une direction transversale orthogonale à l'axe de détection D et contenue dans un plan de diffraction (X, D), est inférieur ou égal à 0,5mm ou à 0,2°.

**12.** Diffractomètre selon l'une des revendications 9 à 11, **caractérisé en ce qu'**il comprend des moyens de calcul (32), dits moyens de recalage, configurés pour établir, pour chaque spectre en énergie mesuré Si(E), un spectre recalé exprimé en fonction d'une variable qui prend en compte l'énergie du rayonnement diffusé et l'angle de diffraction θi,

**13.** Diffractomètre selon la revendication 12, **caractérisé en ce que** : les moyens de recalage sont configurés pour établir, pour chaque pixel (Pi), un spectre en transfert de quantité de mouvement Si(x) à partir du spectre en énergie mesuré pour ledit pixel en effectuant un changement de variable grâce à la formule :

$$x = \frac{\sin(\theta_i / 2)}{\lambda} = \frac{E\sin(\theta_i / 2)}{hc}$$

où θi désigne l'angle d'observation du pixel i (Pi) et λ est la longueur d'onde correspondant à l'énergie E,

✔ les moyens de combinaison sont configurés pour sommer des spectres ainsi recalés.

**14.** Diffractomètre selon l'une des revendications 9 à 13, **caractérisé en ce que** le détecteur (3) est du type détecteur à matériau (30) semi-conducteur.

**15.** Diffractomètre selon l'une des revendications 9 à 14, **caractérisé en ce que** l'angle θ de diffraction est compris entre 2° et 10°.

**16.** Diffractomètre selon la revendication 15, **caractérisé en ce que** l'angle θ de diffraction est compris entre 3° et 6°.

**17.** Diffractomètre selon l'une des revendications 9 à 16, **caractérisé en ce que** la source (1) utilisée est une source polychromatique, produisant un rayonnement dont l'énergie maximale est comprise entre 10 et 200 keV.

**18.** Diffractomètre selon l'une des revendications 9 à 17, **caractérisé en ce que** le collimateur de détection (4) présente une fente rectangulaire unique de 0,2 mm de hauteur et de 2,5 mm de longueur.

**19.** Diffractomètre selon l'une des revendications 9 à 18, **caractérisé en ce que** :

✔ les moyens (33) de vérification d'au moins un critère multimatériau sont configurés pour établir une courbe représentant, en ordonnées, la position d'un premier maximum local dans le spectre recalé d'un pixel Pi, en fonction, en abscisses, d'un angle de diffraction θi du pixel Pi ou d'une position latérale Yi de celui-ci, définie comme étant une coordonnée du pixel Pi selon une direction transversale (T), orthogonale à l'axe de détection D et contenue dans un plan de détection (X,D).

✔ les moyens (33) de formation de groupes de pixels sont configurés pour regrouper dans un même groupe deux pixels $P_i$ et $P_{i+1}$ adjacents selon la direction transversale si et seulement si la différence entre la position du premier maximum local dans le spectre du pixel $P_i$ et la position du premier maximum local dans le spectre du pixel $P_{i+1}$ ne varient pas de plus de 10%.

**20.** Diffractomètre selon l'une des revendications 9 à 19, **caractérisé en ce que** le collimateur de détection (4) est un collimateur ouvert présentant une fente ayant une hauteur (h) supérieure à 1 mm.

**Patentansprüche**

**1.** Verfahren zur Analyse einer Materialprobe (100) durch Diffraktometrie, wobei

- ein Diffraktometer verwendet wird, enthaltend

• eine Quelle (1), die ein einfallendes Strahlenbündel mit Mittelachse X emittierten kann,
• einen Detektor (3), enthaltend

○ ein Detektormaterial (30), das auf der Seite der Materialprobe eine Ebene (31), Detektionsebene genannt, aufweist,
○ Mittel (32), spektrometrische Messmittel genannt, die dazu geeignet sind, eine von jeder Photonenwechselwirkung mit dem Detektormaterial freigesetzte Energie zu messen und zumindest ein Energiespektrum, mit S(E) bezeichnet, zu erstellen;

• einen Kollimator (4), Detektionskollimator genannt, der dem Detektor (3) zugeordnet ist, wobei der Detektor und der Detektionskollimator so angeordnet sind, das sie eine Detektionsachse D aufweisen, die mit der Mittelachse X des einfallenden Strahlenbündels einen Beugungswinkel θ einschließt,

- die Probe (100) mit dem einfallenden Strahlenbündel bestrahlt wird,
- eine Vielzahl von Energiespektren erstellt wird, die kombiniert werden, **dadurch gekennzeichnet, dass**
- der verwendete Detektor ein verpixelter Detektor ist, der Mittel zum Lokalisieren einer Wechselwirkung eines Photons mit dem Detektormaterial enthält, mit denen einerseits eine Unterteilung des Detektors in virtuelle Pixel bestimmt werden kann und andererseits jeder Photonenwechselwirkung eines der virtuellen Pixel zugeordnet werden kann;
- für jedes virtuelle Pixel (Pi) des Detektors ein Energiespektrum Si(E), Messspektrum genannt, erstellt wird,
- die Kombination für verschiedene virtuelle Pixel (Pi) des Detektors gemessene Spektren betrifft,
- vor der Kombination die Erfüllung zumindest eines Kriteriums, Mehrfachmaterialkriterium genannt, überprüft wird, das repräsentativ ist für das Vorhandensein von mehreren Materialschichten,
- Pixelgruppen gebildet werden, indem Ergebnisse des vorhergehenden Schrittes der Überprüfung verwendet werden, wobei jede Gruppe einer Materialschicht entspricht, wobei verschiedene Gruppen verschiedenen Materialschichten entsprechen,
- der Schritt der Kombination gruppenweise erfolgt, d. h. dass die für die Pixel (Pi) einer gleichen Gruppe erhaltenen Spektren kombiniert werden, und zwar für jede gebildete Gruppe.

**2.** Verfahren nach Anspruch 1,
**dadurch gekennzeichnet, dass**
der verwendete Detektor in der Detektionsebene verpixelt wird.

**3.** Verfahren nach einem der vorangehenden Ansprüche,
**dadurch gekennzeichnet, dass**
der Abstand zwischen zwei benachbarten Pixeln in einer Querrichtung, die orthogonal zur Detektionsachse D verläuft und in einer Beugungsebene (X, D) enthalten ist, kleiner oder gleich 0,5 mm bzw. 0,2° ist.

**4.** Verfahren nach einem der vorangehenden Ansprüche,
**dadurch gekennzeichnet, dass**
vor dem Schritt der Kombination und vor dem Schritt der Überprüfung des Mehrfachmaterialkriteriums ein Schritt der Neueinstellung der Messspektren erfolgt, bei dem jedes Messspektrum Si(E) in Abhängigkeit von einer neuen Variablen (x) ausgedrückt wird, welche die Energie der gestreuten Strahlung und den Betrachtungswinkel θi des entsprechenden Pixels berücksichtigt, wodurch ein neueingestelltes Spektrum Si(x) für jedes Pixel (Pi) des Detektors erhalten wird.

5. Verfahren nach den vorangehenden Ansprüche, **dadurch gekennzeichnet, dass**

   - in dem Schritt der Neueinstellung die erstellten, neu eingestellten Spektren Impulsübertragungsspektren Si(x) sind, wobei die Änderung der Variablen unter Verwendung der nachfolgenden Formel erfolgt:

$$X = \frac{\sin(\theta i/2)}{\lambda} = \frac{E\sin(\theta i/2)}{hc}$$

   worin $\theta_i$ den dem Pixel i entsprechenden Beugungswinkel, d. h. dem Winkel zwischen der Achse X des einfallenden Strahlbündels und der durch das Zentrum des Pixels Pi und das Zentrum des Detektionskollimators verlaufenden Achse Di bezeichnet und $\lambda$ die der Energie E entsprechende Wellenlänge ist,
   - in dem Schritt der Kombination für jede Gruppe die neu eingestellten Spektren Si(x) der Pixel der Gruppe summiert werden.

6. Verfahren nach einem der vorangehenden Ansprüche, **dadurch gekennzeichnet, dass** das Mehrfachmaterialkriterium ausgewählt wird aus:

   - einer Änderung der Position eines ersten lokalen Maximums bei den neu eingestellten Spektren um mehr als 10 % zwischen zwei benachbarten Pixeln in einer Querrichtung (T), die orthogonal zur Detektionsrichtung (D) verläuft,
   - einer Änderung der Position eines zweiten lokalen Maximums bei den neu eingestellten Spektren um mehr als 10 % zwischen zwei benachbarten Pixeln in Querrichtung,
   - einer Änderung der Summe der Kanäle des neu eingestellten Spektrums eines jeden Pixels um mehr als 10 % zwischen zwei benachbarten Pixeln in Querrichtung.

7. Verfahren nach Anspruch 6, **dadurch gekennzeichnet, dass** eine Kurve konstruiert wird, die die Position des ersten bzw. des zweiten lokalen Maximums im Spektrum als Ordinate in Abhängigkeit von der seitlichen Position (Yi) des Pixels (Pi) bzw. seines Betrachtungswinkels θi als Abszisse darstellt.

8. Verfahren nach einem der vorangehenden Ansprüche, **dadurch gekennzeichnet, dass** der Detektionskollimator (4) ein offener Kollimator ist, der einen Schlitz mit einer Höhe von über 1 mm aufweist.

9. Diffraktometer, enthaltend:

   • eine Quelle (1), die ein einfallendes Strahlenbündel mit Mittelachse X emittierten kann,
   • einen Detektor (3), enthaltend

      ○ ein Detektormaterial (30), das auf der Seite der Materialprobe eine Ebene, Detektionsebene genannt, aufweist,
      ○ Mittel (32), spektrometrische Messmittel genannt, die dazu ausgelegt sind, eine von jeder Photonenwechselwirkung mit dem Detektormaterial freigesetzte Energie zu messen und zumindest ein Energiespektrum zu erstellen;

   • einen Kollimator (4), Detektionskollimator genannt, der dem Detektor zugeordnet ist, wobei der Detektor und der Detektionskollimator so angeordnet sind, das sie eine Detektionsachse D aufweisen, die mit der Mittelachse X des einfallenden Strahlenbündels einen Beugungswinkel θ einschließt,
   • Mittel (33) zur Kombination von Spektren, **dadurch gekennzeichnet, dass**

      - der Detektor ein verpixelter Detektor ist, der Mittel zum Lokalisieren einer Wechselwirkung eines Photons mit dem Detektormaterial enthält, mit denen einerseits eine Unterteilung des Detektors in virtuelle Pixel bestimmt werden kann und andererseits jeder Photonenwechselwirkung eines der virtuellen Pixel zugeordnet werden kann;
      - die spektrometrischen Messmittel (32) dazu ausgelegt sind, für jedes virtuelle Pixel (Pi) des Detektors ein Energiemessspektrum Si(E) zu erstellen,
      - die Kombinationsmittel (33) dazu ausgelegt sind, für verschiedene Pixel (Pi) des Detektors erhaltene Energiespektren Si(E) zu kombinieren, und dass das Diffraktometer ferner enthält:
      - Mittel (33) zum Überprüfen der Erfüllung zumindest eines Kriteriums, Mehrfachmaterialkriterium genannt, das repräsentativ ist für das Vorhandensein von mehreren Materialschichten,

- Mittel (33) zum Bilden von Pixelgruppen, wobei jede Gruppe einer Materialschicht entspricht, wobei verschiedene Gruppen verschiedenen Materialschichten entsprechen,
- wobei die Kombinationsmittel (33) dazu ausgelegt sind, die Spektren gruppenweise zu kombinieren, d. h. für jede Gruppe die für die Pixel der Gruppe erhaltenen Spektren zu kombinieren.

10. Diffraktometer nach Anspruch 9,
**dadurch gekennzeichnet, dass**
der Detektor in der Detektionsebene verpixelt ist.

11. Diffraktometer nach einem der Ansprüche 9 oder 10,
**dadurch gekennzeichnet, dass**
der Abstand zwischen zwei benachbarten Pixeln in einer Querrichtung, die orthogonal zur Detektionsachse D verläuft und in einer Beugungsebene (X, D) enthalten ist, kleiner oder gleich 0,5 mm bzw. 0,2° ist.

12. Diffraktometer nach einem der Ansprüche 9 bis 11,
**dadurch gekennzeichnet, dass**
es Rechenmittel (32), Neueinstellungsmittel genannt, enthält, die dazu ausgelegt sind, für jedes Energiemessspektrum Si(E) ein neu eingestelltes Spektrum zu erstellen, das in Abhängigkeit von einer Variablen ausgedrückt wird, welche die Energie der gestreuten Strahlung und den Beugungswinkel $\theta_i$ berücksichtigt.

13. Diffraktometer nach Anspruch 12,
**dadurch gekennzeichnet, dass**

- die Neueinstellmittel dazu ausgelegt sind, für jedes Pixel (Pi) ein Impulsübertragungsspektrum Si(x) ausgehend von dem Energiemessspektrum für das Pixel zu erstellen, indem eine Änderung der Variablen mit der Formel erfolgt:

$$X = \frac{\sin(\theta i/2)}{\lambda} = \frac{E\sin(\theta i/2)}{hc}$$

worin $\theta_i$ den Betrachtungswinkel des Pixels i (Pi) bezeichnet und $\lambda$ die der Energie E entsprechende Wellenlänge ist,
- die Kombinationsmittel dazu ausgelegt sind, die so neu eingestellten Spektren zu summieren.

14. Diffraktometer nach einem der Ansprüche 9 bis 13,
**dadurch gekennzeichnet, dass**
der Detektor (3) als Detektor mit Halbleitermaterial (30) ausgeführt ist.

15. Diffraktometer nach einem der Ansprüche 9 bis 14,

**dadurch gekennzeichnet, dass**
der Beugungswinkel $\theta$ zwischen 2° und 10° beträgt.

16. Diffraktometer nach Anspruch 15,
**dadurch gekennzeichnet, dass**
der Beugungswinkel $\theta$ zwischen 3° und 6° beträgt.

17. Diffraktometer nach einem der Ansprüche 9 bis 16,
**dadurch gekennzeichnet, dass**
die verwendete Quelle (1) eine polychromatische Quelle ist, die eine Strahlung erzeugt, deren maximale Energie zwischen 10 und 200 keV liegt.

18. Diffraktometer nach einem der Ansprüche 9 bis 17,
**dadurch gekennzeichnet, dass**
der Detektionskollimator (4) einen einzelnen rechteckförmigen Schlitz mit 0,2 mm Höhe und 2,5 mm Länge aufweist.

19. Diffraktometer nach einem der Ansprüche 9 bis 18,
**dadurch gekennzeichnet, dass**
die Mittel (33) zum Überprüfen zumindest eines Mehrfachmaterialkriteriums dazu ausgelegt sind, eine Kurve zu erstellen, die die Position eines ersten lokalen Maximums im neu eingestellten Spektrum eines Pixels Pi als Ordinate in Abhängigkeit von einem Beugungswinkel $\theta_i$ des Pixels Pi oder einer seitlichen Position Yi desselben als Abszisse darstellt, die als eine Koordinate des Pixels Pi in einer Querrichtung (T) definiert ist, die orthogonal zur Detektionsachse D verläuft und in einer Detektionsebene (X, D) enthalten ist,

- die Mittel (33) zum Bilden von Pixelgruppen dazu ausgelegt sind,

in einer gleichen Gruppe zwei Pixel $P_i$ und $P_{i+1}$, die in Querrichtung benachbart sind, dann, und nur dann zusammenzufassen, wenn die Differenz zwischen der Position des ersten lokalen Maximums in dem Spektrum des Pixels Pi und der Position des ersten lokalen Maximums in dem Spektrum des Pixels $P_{i+1}$ nicht um mehr als 10 % variiert.

20. Diffraktometer nach einem der Ansprüche 9 bis 19,
**dadurch gekennzeichnet, dass**
der Detektionskollimator (4) ein offener Kollimator ist, der einen Schlitz mit einer Höhe (h) von über 1 mm aufweist.

## Claims

1. A method of analyzing a sample of material (100) by diffractometry, wherein:

  ✔ a diffractometer is used which comprises

♦ a source (1) adapted to emit an incident beam with a central axis X,
♦ a detector (3) comprising

◦ a detector material (30), which, on the near side to the sample of material, presents a plane (31) termed detection plane,
◦ means (32), termed spectrometry measurement means, adapted to measure an energy released by each photon interaction with the detector material and to establish at least one energy spectrum, denoted S(E);

♦ a collimator (4), termed detection collimator, associated with the detector (3), the detector and the detection collimator being arranged so as to have a detection axis D forming a diffraction angle θ with the central axis X of the incident beam,

✔ the sample (100) is irradiated with the incident beam,
✔ a plurality of energy spectra are established, a combination of which is carried out,

**characterized in that**:

✔ the detector used is a pixelated detector, comprising means for locating an interaction of a photon with the detector material, making it possible to define a partition of the detector in virtual pixels, and making it possible to associate one of said virtual pixels with each photon interaction;
✔ for each virtual pixel (Pi) of the detector, an energy spectrum Si(E), termed measured spectrum, is established,
✔ the combination relates to spectra measured for different virtual pixels (Pi) of the detector,
✔ before combining, the fulfillment of at least one criterion is verified, that criterion being termed multimaterial criterion, representing the presence of several layers of material,
✔ groups of pixels are formed using results of the preceding verifying step, each group corresponding to a layer of material, different groups corresponding to different layers of material,
✔ the combining step is carried out by group, that is to say that the spectra obtained for the pixels (Pi) of a same group are combined, for each group formed.

2. A method according to claim 1, **characterized in that** the detector used is pixelated in the detection plane.

3. A method according to one of the preceding claims, **characterized in that** the pitch between two adjacent pixels in a transverse direction orthogonal to the detection axis D and contained in a diffraction plane (X, D), is less than or equal to 0.5mm or to 0.2°.

4. A method according to one of the preceding claims, **characterized in that** prior to the combining step and to the muiltimaterial criterion verifying step, a step is carried out of adjusting the measured spectra, in which each measured spectrum Si(E) is expressed according to a new variable (x) which takes into account the energy of the scattered radiation and the angle of observation θi of the corresponding pixel, and an adjusted spectrum Si(x) is thereby obtained for each pixel (Pi) of the detector.

5. A method according to the preceding claims, **characterized in that**:

✔ in the adjusting step, the adjusted spectra established are momentum transfer spectra Si(x), the change in variable being carried out using the following formula:

$$x = \frac{\sin(\theta_i / 2)}{\lambda} = \frac{E \sin(\theta_i / 2)}{hc},$$

where θi designates the diffraction angle corresponding to the pixel Pi that is to say the angle between the axis X of the incident beam and the axis Di passing by the center of the pixel Pi and the center of the detection collimator, and A is the wavelength corresponding to the energy E;
✔ in the combining step, for each group, the adjusted spectra Si(x) of the pixels of said group are summed.

6. A method according to one of the preceding claims, **characterized in that** the multimaterial criterion is chosen from among:

✔ a variation greater than 10% of the position in the adjusted spectra of a first local maximum, between two adjacent pixels in a transverse direction (T), orthogonal to the detection direction (D)
✔ a variation greater than 10% of the position in the adjusted spectra of a second local maximum, between two adjacent pixels in the transverse direction.
✔ a variation greater than 10% of the sum of the channels of the adjusted spectrum of each pixel, between two adjacent pixels in the transverse direction.

7. A method according to claim 6, **characterized in**

**that** a curve is constructed wherein the y-axis represents the position in the spectrum of the first or second local maximum and wherein the x-axis represents the lateral position (Yi) of the pixel (Pi) or its angle of observation (θi).

8. A method according to one of the preceding claims, **characterized in that** the detection collimator (4) is an open collimator presenting a slot having a height greater than 1 mm.

9. A diffractometer comprising:

♦ a source (1) adapted to emit an incident beam with a central axis X,
♦ a detector (3) comprising

○ a detector material (30), which, on the near side to the sample of material, presents a plane termed detection plane,
○ means (32), termed spectrometry measurement means, configured to measure an energy released by each photon interaction with the detector material and to establish at least one energy spectrum;

♦ a collimator (4), termed detection collimator, associated with the detector, the detector and the detection collimator being arranged so as to have a detection axis D forming a diffraction angle θ with the central axis X of the incident beam,

○ spectra combining means (33),
**characterized in that**:

✔ the detector is a pixelated detector comprising means for locating an interaction of a photon with the detector material, making it possible to define a partition of the detector in virtual pixels, and making it possible to associate one of said virtual pixels with each photon interaction;
✔ the spectrometry measuring means (32) are configured to establish a measured energy spectrum Si(E) for each pixel (Pi) of the detector,
✔ the combining means (33) are configured to combine energy spectra Si(E) obtained for different pixels Pi of the detector,

and **in that** the diffractometer further comprises:

✔ means (33) for verifying the fulfillment of at least one criterion, termed multimaterial criterion, representing the presence of several layers of materials,
✔ means (33) for forming groups of pixels, each group corresponding to a layer of material, different groups corresponding to different layers of material,
✔ the combining means (33) being configured to combine spectra by group, that is to say to combine, for each group, the spectra obtained for the pixels of said group.

10. A diffractometer according to claim 9, **characterized in that** the detector is pixelated in the detection plane.

11. A diffractometer according to one of claims 9 or 10, **characterized in that** the pitch between two adjacent pixels in a transverse direction orthogonal to the detection axis D and contained in a diffraction plane (X, D), is less than or equal to 0.5mm or to 0.2°.

12. A diffractometer according to one of claims 9 to 11, **characterized in that** it comprises computing means (32), termed adjusting means, configured to establish, for each measured energy spectrum Si(E), an adjusted spectrum expressed according to a variable which takes into account the energy of the scattered radiation and the diffraction angle θi.

13. A diffractometer according to claim 12, **characterized in that**: the adjusting means are configured to establish, for each pixel (Pi), a momentum transfer spectrum Si(x) based on the energy spectrum measured for said pixel by performing a change in variable by virtue of the following formula:

$$x = \frac{\sin(\theta_i / 2)}{\lambda} = \frac{E \sin(\theta_i / 2)}{hc}$$

where $\theta_i$ designates the observation angle of the pixel i (Pi) and $\lambda$ is the wavelength corresponding to the energy E,

✔ the combining means are configured to sum spectra so adjusted.

14. A diffractometer according to one of claims 9 to 13, **characterized in that** the detector (3) is of the type with a semiconductor detector material (30).

15. A diffractometer according to one of claims 9 to 14, **characterized in that** the diffraction angle θ is comprised between 2° and 10°.

16. A diffractometer according to claim 15, **characterized in that** the diffraction angle θ is comprised between 3° and 6°.

**17.** A diffractometer according to one of claims 9 to 16, **characterized in that** the source (1) used is a polychromatic source, producing radiation of which the maximum energy is comprised between 10 and 200 keV.

**18.** A diffractometer according to one of claims 9 to 17, **characterized in that** the detection collimator (4) presents a single rectangular slot of 0.2 mm in height and 2.5 mm in length.

**19.** A diffractometer according to one of claims 9 to 18, **characterized in that**:

> ✓ the means (33) for verifying at least one multimaterial criterion are configured to establish a curve representing the position of a first local maximum in the adjusted spectrum of a pixel Pi, along the y-axis, according to, along the x-axis, an angle of diffraction $\theta i$ of the pixel Pi or a lateral position Yi thereof defined as being a coordinate of the pixel Pi in a transverse direction (T), orthogonal to the detection axis D and contained in a detection plane (X,D).
> ✓ the means (33) for forming groups of pixels are configured to group together within the same group two adjacent pixels Pi and $P_{i+1}$ in the transverse direction if and only if the difference between the position of the first local maximum in the spectrum of the pixel Pi and the position of the first local maximum in the spectrum of the pixel $P_{i+1}$ do not vary by more than 10%.

**20.** A diffractometer according to one of claims 9 to 19, **characterized in that** the detection collimator (4) is an open collimator presenting a slot having a height (h) greater than 1 mm.

Fig.1

EP 2 798 339 B1

P_{16}   P_{12}   P_8

P_{15}

P_4

P_3

P_2

P_1

P_{13}

P_9   P_5

P_c

## Fig.2

Fig.3

Fig.4

Fig.5A

Fig.5B

Fig.6A

Fig.6B

Fig.7

Fig.8a

Fig.8b

Fig. 8

26

Fig.9

Fig.10

Fig.11a

Fig. 11

Fig.11b

Fig.12

Fig.13

**EP 2 798 339 B1**

## RÉFÉRENCES CITÉES DANS LA DESCRIPTION

**Documents brevets cités dans la description**

- WO 2008142446 A

- US 20060140340 A